# EUROPÄISCHE PATENTANMELDUNG

(11) **EP 2 324 928 A1**
(43) Veröffentlichungstag der Anmeldung: **25.05.2011**
(21) Anmeldenummer: 10013245.5
(22) Anmeldetag: 10.07.2008
(51) Int. Cl.: B03C 3/10, B05B 15/12

(54) **Vorrichtung zum Abscheiden von Lack-Overspray**

(30) Priorität: 25.07.2007 DE 102007036553
(62) Teilanmeldung aus: 08773946.2
(71) Anmelder: Eisenmann AG, 71032 Böblingen (DE)
(72) Erfinder: Swoboda, Werner, 71032 Böblingen (DE); Hihn, Erwin, 72141 Walddorfhäslach (DE); Hanf, Jürgen, 72070 Tübingen (DE); Link, Kersten, 71120 Grafenau (DE); Katefidis, Apostolos, 71116 Gärtringen (DE)
(74) Vertreter: Ostertag, Ulrich

(57) **Zusammenfassung**

Eine Vorrichtung (101,201,401) zum Abscheiden von Lack-Overspray aus der mit Overspray beladenen Kabinenluft von Lackierkabinen weist in einem Gehäuse (102,202,402) mindestens ein Abscheideelement (104,204,404) auf, dessen Oberfläche elektrisch leitend und mit einem Pol einer Hochspannungsquelle (114,214,414) verbunden ist. Dem Abscheideelement (104,204,404) ist eine Elektrodenanordnung (112, 212,412) zugeordnet, die mit dem anderen Pol der Hochspannungsquelle (114,214,414) verbunden ist. Die Kabinenluft wird an dem Abscheideelement (104,204,404) und der Elektrodenanordnung (112,212,412) derart vorbeigeführt, dass die Overspray-Partikel ionisiert werden und sich an der Oberfläche des Abscheideelementes (104,204,404) niederschlagen. Das Abscheideelement (104,204,404) wird kontinuierlich oder intermittierend bewegt, wobei eine Abstreifeinrichtung (110, 210,410) den an der Oberfläche des Abscheideelementes (104, 204,404) befindlichen Overspray abstreift. Dieser kann dann von einer geeigneten Fördereinrichtung (103,203,403) zum Entsorgen oder Wiederverwenden abtransportiert werden. Mindestens ein Abscheideelement ist dabei eine drehbare Walze (104, 204, 404).

## Beschreibung

Die Erfindung betrifft eine Vorrichtung zum Abscheiden von Lack-Overspray aus der mit Overspray-beladenen Kabinenluft von Lackierkabinen nach dem Oberbegriff des Anspruches 1.

Zum effizienten Sammeln und Abscheiden von Wasserlack- bzw. Lösemittellack-Overspray werden im Automotiv-Bereich bisher fast ausschließlich Nassabscheider, auch Nass-Auswaschungen genannt, eingesetzt, wie sie beispielsweise in der EP 0 740 576 B1 oder der DE 44 01 741 beschrieben sind.

Im Allgemeinen besitzen derartige Nassabscheider unterhalb des rostartig ausgebildeten Kabinenbodens zwei zur Kabinenmitte geneigte Bleche, die vom Rand der Kabine her mit Wasser überströmt werden. Das Wasser fließt gemeinsam mit der von oben kommenden Kabinenluft durch eine Öffnung zwischen den inneren Rändern der beiden Bleche und gelangt von dort in eine die Luftströmung beschleunigende Düse. In dieser Düse findet eine Verwirbelung der durchströmenden Luft mit dem Wasser statt. Bei diesem Vorgang treten die Overspray-Partikel weitgehend in das Wasser über, so dass die Luft den Wasserabscheider im Wesentlichen gereinigt verlässt und sich die Overspray-Partikel in dem Wasser befinden. Aus diesem können sie dann wieder gewonnen oder entsorgt werden.

Die Hauptwirkung dieser Nassabscheider beruht, wie erwähnt, auf der Verwirbelung von Luft und Wasser; das die unteren Bodenbleche überströmende Wasser nimmt zwar aus der vorbeigeführten Luft auch in gewissem Umfange Overspray-Partikel auf; die Bleche können daher im oben genannte Sinne "Abscheideelemente" genannt werden. Dieser Effekt ist aber gegenüber dem Haupteffekt gering.

Die bekannten Nassabscheider haben den Vorteil einer guten Reinigungsleistung bei unproblematischem Betrieb. Diesem stehen jedoch auch diverse Nachteile gegenüber: So benötigen sie sehr viel Energie zur Umwälzung verhältnismäßig großer Wassermengen sowie durch den Druckverlust an den Strömungsengstellen, insbesondere der beschleunigenden Düse. Die Aufbereitung des Spülwassers ist durch den hohen Einsatz an lackbindenden und entklebenden Chemikalien und die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat.

Aufgabe der vorliegenden Erfindung ist es, eine Vorrichtung der eingangs genannten Art zu schaffen, bei welcher insbesondere der Energieverbrauch reduziert ist.

Diese Aufgabe wird durch die im Anspruch 1 angegebene Erfindung gelöst.

Die vorliegende Erfindung verlässt also den Grundgedanken, mit großen Mengen Wasser, die mit dem Luftstrom verwirbelt werden, aus der Luft die Overspray-Partikel zu entfernen, sondern bewirkt die Abscheidung auf "trockenem" Wege. Dadurch entfallen alle Nachteile, die oben im Einzelnen erwähnt wurden und mit der Verwendung von Wasser verbunden sind. Die Trockenabscheidung erfolgt an elektrisch leitenden Oberflächen von Abscheideelementen. Die Effizienz dieser Abscheidung wird durch eine Ionisation der Overspray-Partikel verstärkt, die dafür sorgt, dass die Overspray-Partikel zu den leitenden Oberflächen der Abscheideelemente elektrostatisch hingezogen werden. Um einen Dauerbetrieb der Vorrichtung zu gewährleisten, sind die Abscheideelemente und ggfs. die Abstreifeinrichtung beweglich, so dass stets ein verhältnismäßig sauberer Oberflächenbereich der Luft präsentiert werden kann, während andere Oberflächenbereiche durch die Abstreifeinrichtung von abgeschiedenem Overspray befreit werden.

Mindestens ein Abscheidelement ist erfindungsgemäß eine drehbare Walze. Walzen sind verhältnismäßig preiswerte Teile.

Bevorzugt wird, wenn mehrere Walzen mit parallelen Achsen nebeneinander und/oder übereinander angeordnet sind. Diese Maßnahme dient der Vergrößerung der Abscheide-Oberflächen und der Erhöhung der Abscheidekapazität.

Die Achse jeder Walze kann etwa horizontal verlaufen. Dies hat zur Folge, dass der im Wesentlichen vertikal verlaufende Kabinenluftstrom auf die Mantelfläche der Walzen auftrifft, die auf diese Weise eine Prallplattenwirkung erhält, was im Blick auf die Abscheideeffizienz von Vorteil ist.

Alternativ kann die Achse jeder Walze etwa vertikal verlaufen. Dies bedeutet dann zwar, dass die "Prallflächen", welche die Walzen dem Luftstrom bieten, reduziert sind. Es verlängert sich jedoch die Verweilzeit der Overspray-Partikel in dem elektrischen Feld zwischen Elektrodeneinrichtung und Walze.

Ein Kompromiss lässt sich dadurch erzielen, dass die Achse jeder Walze unter einem schrägen Winkel, der weder 0° noch 90° ist, zur Horizontalen verläuft. Je kleiner dieser schräge Winkel ist, um so stärker tritt die "Prallwirkung" der Walzenmantelfläche in den Vordergrund, und umso näher der Winkel an 90° ist, umso länger wird die Verweilzeit der Overspray-Partikel im elektrischen Feld.

Im Allgemeinen sollten mehrere elektrisch parallel geschaltete Elektrodeneinrichtungen vorgesehen sein, die in die Zwischenräume zwischen den Abscheideelementen und/oder die Zwischenräume zwischen den Abscheideelementen und den Wänden des Gehäuses eingreifen. Die Zahl und Dichte der Elektrodeneinrichtungen wird so gewählt, dass eine möglichst vollständige Ionisierung der Overspray-Partikel erreicht wird.

Die Elektrodeneinrichtung kann die Form eines geradlinigen Drahtes oder eines Stabes aufweisen. Diese einfache Form garantiert einen niedrigen Preis.

Die Elektrodeneinrichtung kann auch die Form eines in einer Ebene gegebenenfalls mehrfach hin- und hergebogenen Drahtes oder Stabes besitzen. Sie erhält auf diese Weise eine Art "flächigen" Charakters, was die Wechselwirkung zwischen Elektrodeneinrichtung und vorbeiströmender Luft vergrößert.

Die Elektrodeneinrichtung kann auch eine Mehrzahl von auseinanderweisenden Elektrodenspitzen umfassen. Bekanntlich entstehen an Spitzen besonders hohe elektrische Felder, welche der Ionisation besonders förderlich sind. Zudem sind derartige Elektrodeneinrichtungen nach einer gewissen Betriebsdauer auch leichter zu reinigen als solche, welche aus dünnen Drähten oder Stäben bestehen.

Eine solche Elektrodeneinrichtung kann vor den Abscheideelementen im Kabinenluftstrom angeordnet sein, wo sie insbesondere für Wartungszwecke leicht zugänglich ist.

Bei einer besonders bevorzugten Ausführungsform ist eine Luftzuführeinrichtung vorgesehen, mit welcher mindestens einer Elektrodeneinrichtung unabhängig von der Kabinenluft ein gesonderter Luftstrom zur Ionisation zuführbar ist. Die Ionisation der Kabinenluft und der von dieser mitgeführten Overspray-Partikel geschieht dabei zumindest teilweise mittelbar, indem zunächst der gesondert zugeführte Luftstrom ionisiert wird und von diesem dann die Ionisation auf die Kabinenluft und die Overspray-Partikel überspringt.

Besonders vorteilhaft ist, wenn der gesonderte Luftstrom angefeuchtet ist, da sich ein solcher angefeuchteter Luftstrom leichter als trockene Luft ionisieren lässt.

Mindestens eine Abstreifeinrichtung kann ein Rakel sein, welches den Overspray von der Oberfläche mindestens eines Abscheideelementes abkratzt. Diese mechanische Art, den Overspray von den Oberflächen zu entfernen, ist besonders zuverlässig und unproblematisch.

Schließlich kann bei einer vorteilhaften Ausführungsform der Erfindung mindestens eine Einrichtung vorgesehen sein, mit welcher der Oberfläche eines Abscheideelementes eine Benetzungsflüssigkeit zuführbar ist. Diese Benetzungsflüssigkeit wird anders als das Wasser bei den eingangs erwähnten Nassabscheidern nur in kleinen Mengen eingesetzt; sie soll nur die Oberflächen der Abscheideelemente befeuchten. Als Benetzungsflüssigkeit kommt beispielsweise ein Adsorber in Frage, der nur die Funktion hat, die Abscheidung der Overspray-Partikeln an den Oberflächen zu fördern. Um zu verhindern, dass der an der Oberfläche der Abscheideelemente abgeschiedene Overspray zu früh fest wird und sich daher nicht mehr abtragen lässt, ist es auch möglich, als Benetzungsflüssigkeit Lösemittel oder gegebenenfalls sogar Frischlack zu verwenden.

Für die Ionisation der Overspraypartikel kann es förderlich sein, wenn die Hochspannungsquelle in der Lage ist, eine gepulste Hochspannung zu erzeugen.

Ausführungsbeispiele der Erfindung werden nachfolgend anhand der Zeichnung näher erläutert. Es zeigen
- Figur 1: ein erstes Ausführungsbeispiel einer Overspray-Abscheidevorrichtung im vertikalen Schnitt;
- Figur 2: die Abscheidevorrichtung von Figur 1 perspekti- visch bei abgenommener Vorderwand;
- Figur 3: einen Schnitt, ähnlich der Figur 1, durch ein zweites Ausführungsbeispiel einer Overspray-Ab- scheidevorrichtung;
- Figur 4: eine perspektivische Ansicht, ähnlich der Figur 2, der Abscheidevorrichtung der Figur 3;
- Figur 5: einen Schnitt, ähnlich den Figuren 1 und 3, durch ein drittes Ausführungsbeispiel einer Overspray-Abscheidevorrichtung;
- Figur 6: eine im Maßstab vergrößerte Schnittansicht eines Details aus Figur 5;
- Figur 7: einen Schnitt gemäß Linie XI-XI von Figur 6;
- Figur 8: perspektivisch in erneut größerem Maßstab ein

### Detail aus den Figuren 10 und 11.

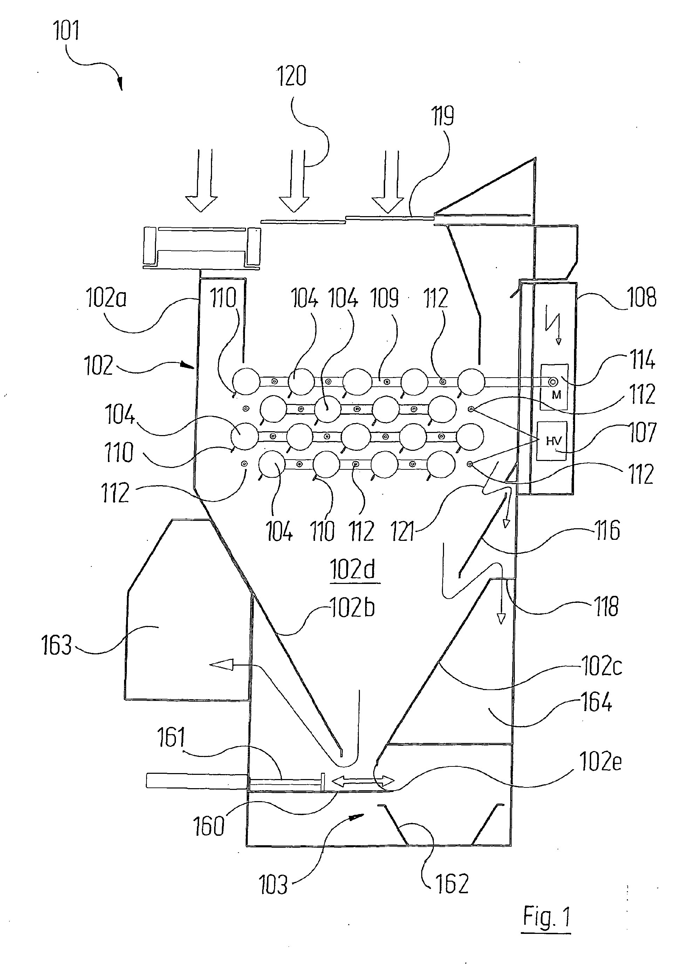

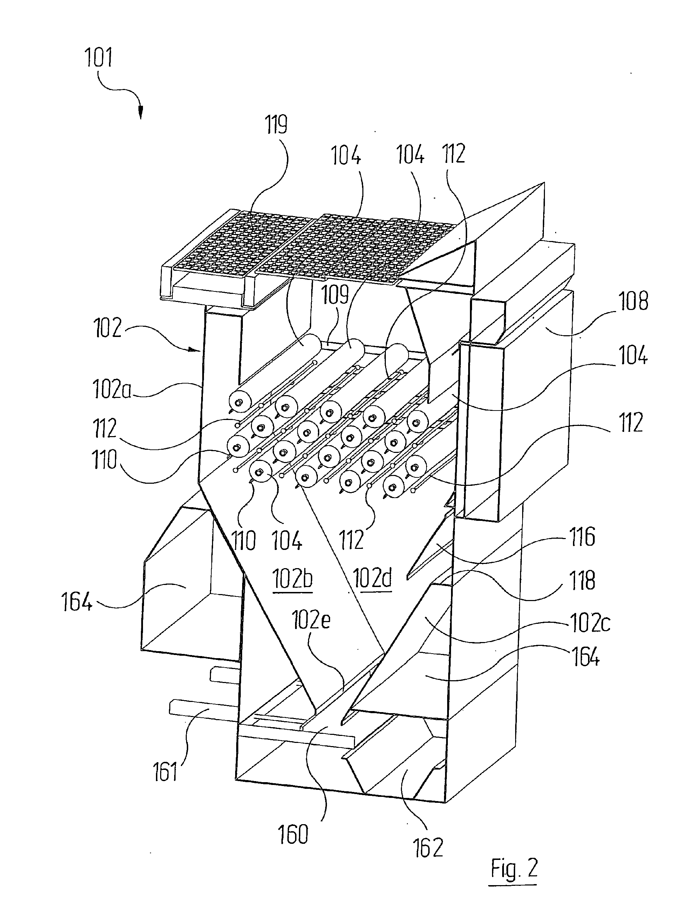

Zunächst wird auf die Figuren 1 und 2 Bezug genommen. Die hier dargestellte und insgesamt mit dem Bezugszeichen 101 gekennzeichnete Overspray-Abscheidevorrichtung umfasst ein Gehäuse 102, das in seinem oberen Bereich rechteckigen Querschnitt und ausschließlich vertikale Seitenwände aufweist, während es im unteren Bereich durch zwei schräg nach unten konvergierende Seitenwände 102b, 102c und zwei vertikal verlaufende Stirnwände 102d (nur eine in den Figuren 1 und 2 gezeigt) begrenzt ist. Auf diese Weise ist der untere Bereich des Gehäuses 102 nach Art eines Trichters ausgebildet.

Unterhalb der von den unteren Rändern der Gehäusewände 102b, 102c und 102d begrenzten Austrittsöffnung 102e des "Trichters" ist eine Fördereinrichtung 103 angeordnet. Die Fördereinrichtung 103 umfasst eine direkt unterhalb der Austrittsöffnung 102e angebrachte Auffangplatte 160 und eine neben dieser angeordnete Rinne 162, in der sich beispielsweise ein Schaber-Förderer (nicht dargestellt) bewegt. Eine pneumatisch betätigte Schiebereinrichtung 161 dient dazu, den sich auf der Auffangplatte 160 sammelnden Overspray von Zeit zu Zeit in die benachbarte Rinne 162 zu schieben.

Am oberen Rand der schräg verlaufenden unteren Gehäusewand 102c befindet sich ein Luftaustrittsschlitz 118.

Die Oberseite des Gehäuses 102 wird teilweise durch begehbare und zur Seite fahrbare Gitterroste 119 gebildet.

Im oberen, quaderförmigen Bereich 102a des Gehäuses 102 ist eine Vielzahl von übereinander und nebeneinanderliegenden Abscheideelementen in Form von Walzen 104 mit stählernen Mantelflächen angeordnet, deren Achsen horizontal verlaufen und beim dargestellten Ausführungsbeispiel in vier übereinanderliegenden, horizontalen Ebenen liegen. In jeder dieser Ebenen sind mehrere Walzen 104 in gleicher Höhe vorgesehen. Die Anordnung ist dabei so, dass die Walzen 104 in benachbarten Ebenen seitlich gegeneinander so versetzt sind, dass in der tieferliegenden Ebene die Walzen 104 jeweils unterhalb einer Lücke zwischen zwei Walzen 104 der darüberliegenden Ebene angebracht sind.

Alle Walzen 104 werden über ein Zahnriemengetriebe 109 von dem Motor 107 angetrieben, der ebenso wie eine Hochspannungsquelle 107 in einem Kasten 108 an der in der Zeichnung rechten Seitenwand des Gehäuses 102 untergebracht ist.

Jeder Walze 104 ist ein Rakel 110 zugeordnet, welches sich über die gesamte Länge der Walze 104 in horizontaler Richtung erstreckt.

Zwischen den Walzenebenen verlaufen Elektrodeneinrichtungen 112 die jeweils aus einer Vielzahl von Einzeldrähten bestehen, die parallel zu den Achsen der Walzen 104 verlaufen. Die Elektrodeneinrichtungen 112 sind elektrisch mit der Hochspannungsquelle 107 verbunden.

Die Funktionsweise der Overspray-Abscheidevorrichtung 101 ist wie folgt:
Die mit Overspray-Partikeln beladene Luft tritt im Sinne der Pfeile 120 durch die Gitterroste 119 in den Innenraum des Gehäuses 102 ein. Ein Großteil dieser Luft trifft auf die Mantelflächen der sich drehenden Walzen 104 in der obersten Reihe, die auf diese Weise als "Prallflächen" dienen. Bereits hierdurch scheidet sich an den Mantelflächen der Walzen 104 ein Großteil des Oversprays ab. Die Luft strömt sodann entlang der Mantelfläche der Walzen 104 in den zwischen benachbarten Walzen 104 der obersten Walzenebene befindlichen Schlitz und vereinigt sich dort mit demjenigen Anteil der von oben zuströmenden Luft, der nicht direkt auf die Walzen-Mantelfläche aufgeprallt ist.

Die Luft, welche die oberste Walzenebene passiert hat, trifft nunmehr auf die zweitoberste Ebene von Walzen 104. Da die Anordnung der Walzen 104 in den beiden Ebenen im oben erläuterten Sinne gegeneinander versetzt ist, treffen diese Luftströme auf die Mantelflächen der Walzen 104 in der zweitobersten Ebene. Im Wesentlichen dieselben Vorgänge wiederholen sich dann bei der Passage der Luftströme durch die zweitoberste Walzenebene und die unterste Ebene von Walzen 104.

Die Effizienz der Abscheidung der Overspray-Partikel an den Walzen 104 wird erneut elektrostatisch verstärkt, da die Overspray-Partikel bei der Passage der Elektrodenanordnungen 112 ionisiert und von den auf Massepotential liegenden, metallischen Mantelflächen der Walzen 104 angezogen werden.

Der sich an den Walzenoberflächen sammelnde Overspray wird mit Hilfe der Rakel 110 abgestreift, fällt nach unten, wird mit Hilfe der unteren Gehäusewände 102b, 102c dem Fördersystem 103 zugeführt und fällt auf die Auffangplatte 160. Von dort wird er in zeitlichen Abständen mit Hilfe des Schiebers 161 in die Rinne 162 geschoben und dort mit dem Schaber-Förderer oder sonstwie abtransportiert.

Ein Teil der gereinigten Luft verlässt den unteren Bereich des Gehäuses 102 über die untere Austrittsöffnung 102e und wird dann entlang der Außenseite der Gehäusewand 102b nach oben in einen Luftkanal 163 geführt. Ein anderer Teil der Luft passiert den Luftaustrittsschlitz 118 und gelangt dort in einen zweiten Luftkanal 164. Beide Luftkanäle 163 und 164 vereinigen sich in ihrem weiteren Verlauf und führen ins Freie oder in eine Luftaufbereitungsanlage.

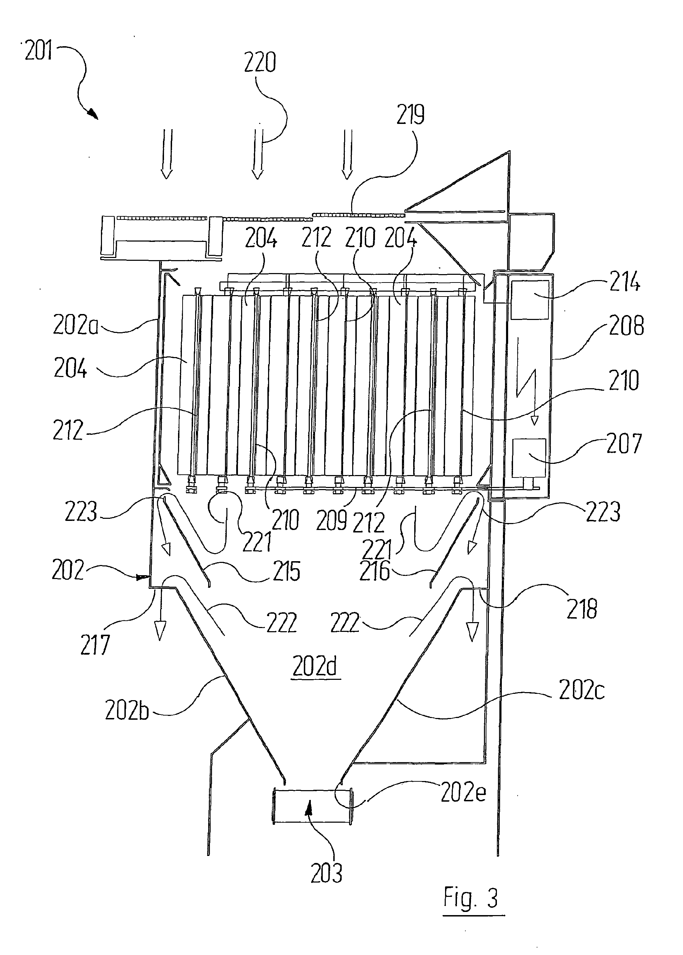

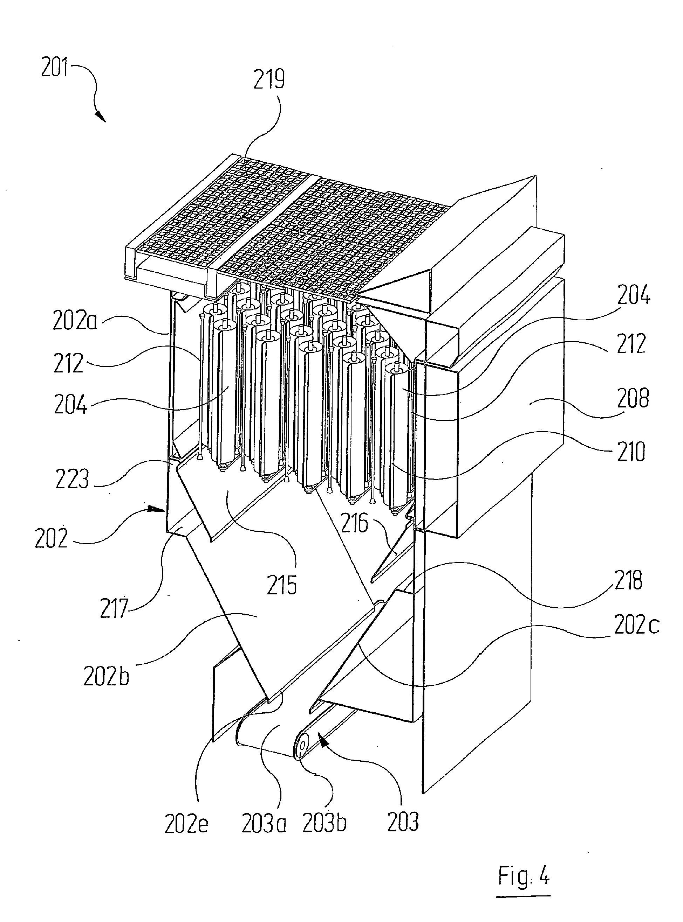

Das zweite Ausführungsbeispiel einer Overspray-Abscheidevorrichtung 201, das in den Figuren 3 und 4 dargestellt ist, stimmt weitgehend mit dem oben beschriebenen Ausführungsbeispiel überein. Entsprechende Teile sind daher mit Bezugszeichen versehen, die gegenüber dem ersten Ausführungsbeispiel um 100 erhöht sind.

Vollständig identisch mit dem zuvor beschriebenen Ausführungsbeispiel sind das Gehäuse 202 mit den unteren, nach unten konvergierenden Gehäusewänden 202b, 202c, den oberen Gitterrosten 219, den Luftaustrittschlitzen 217, 218 und dem Fördersystem 203.

Während beim ersten Ausführungsbeispiel der Figuren 1 und 2 eine Vielzahl von Walzen 104 mit horizontal verlaufenden Achsen vorgesehen war, findet sich beim Ausführungsbeispiel der Figuren 3 und 4 eine Vielzahl von matrixartig angeordneten Walzen 204, deren Achsen vertikal ausgerichtet sind. Alle Walzen 204 werden über ein Zahnriemengetriebe 209 von dem Motor 207 angetrieben. An einer vertikalen Mantellinie jeder Walze 204 liegt erneut ein Rakel 210 an.

In den Zwischenräumen zwischen den Walzen 204 ist eine Vielzahl von Elektrodeneinrichtungen 212 vorgesehen, die bei diesem Ausführungsbeispiel die Form von geradlinigen Drähten oder Stäben besitzen. Alle Elektrodeneinrichtungen 212 sind mit dem Hochspannungsgerät 207 elektrisch verbunden.

Die Funktionsweise dieses zweiten Ausführungsbeispieles einer Overspray-Abscheidevorrichtung 201 ist mit derjenigen der zuvor beschriebenen Ausführungsbeispiele nahezu identisch, sieht man von der detaillierten Strömung der Luft angesichts der unterschiedlichen Geometrie der sich bewegenden Abscheideelemente ab. So strömt beim Ausführungsbeispiel der Figuren 3 und 4 die Luft, welche über die Gitterroste 219 im Sinne der Pfeile 220 ins Innere des Gehäuses 202 gelangt, in vertikaler Richtung durch die Zwischenräume zwischen den senkrecht stehenden Walzen 204. Die Overspray-Partikel werden durch die Elektrodeneinrichtungen 212 ionisiert und in Richtung auf die auf Masse liegenden, metallischen, insbesondere stählernen Mantelflächen der Walzen 204 gezogen. Das sich dort abscheidende Overspray wird mit Hilfe der Rakel 210 abgeschabt, fällt in den unteren Bereich des Gehäuses 202 und letztendlich auf das Förderband der Fördereinrichtung 203.

Die gereinigte Luft verlässt die Overspray-Abscheidevorrichtung über Luftaustrittsschlitze 217, 218 an den oberen Rändern der Gehäusewände 202b und 202c.

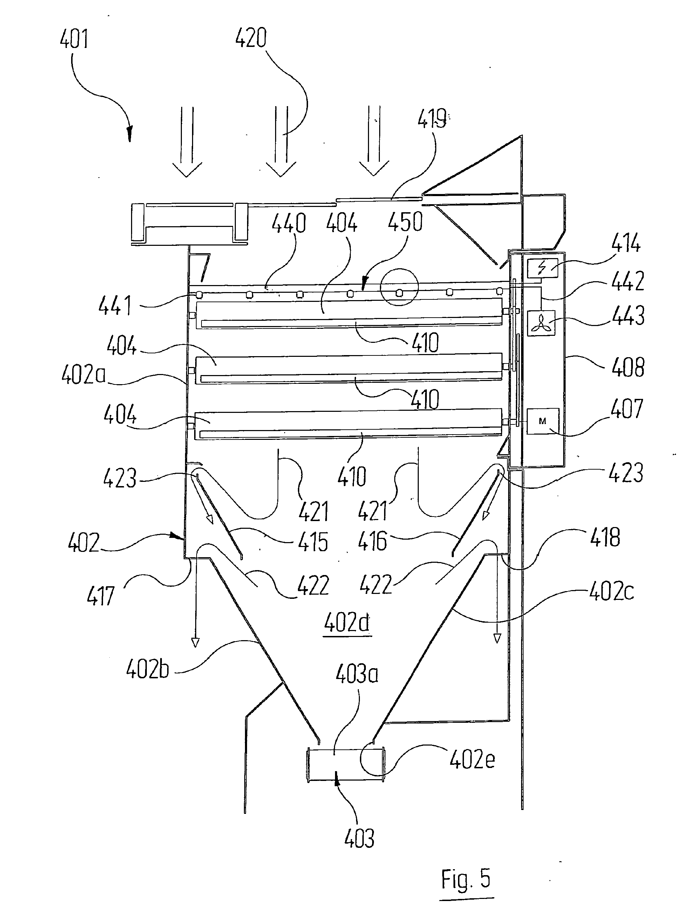

Das in den Figuren 5 bis 8 dargestellte Ausführungsbeispiel einer Overspray-Abscheidevorrichtung 401 unterscheidet sich von demjenigen nach den Figuren 1 und 2 nur in der Ausrichtung der Walzen 104; 404 und in der Elektrodeneinrichtung 112; 412. Dies bedeutet insbesondere, dass beide Ausführungsbeispiele hinsichtlich der Ausgestaltung der Gehäuse 102; 402, der Gitterroste 119; 419, der Luftaustrittschlitze 118; 418, des Transportsystemes 103; 403 und der Rakel 110; 410 vollständig übereinstimmen.

Die Achsen der Walzen 404 in Figur 5 erstrecken sich senkrecht zu den Achsen der Walzen 104 in Figur 1. Außerdem gibt es in Figur 5 fünf Ebenen, in denen die Walzenachsen angeordnet sind. Von diesen fünf Ebenen sind allerdings nur drei dargestellt. Aus Übersichtlichkeitsgründen sind in der Zeichnung die zwischenliegenden beiden Ebenen weggelassen.

Statt gerader oder gebogener Drähte, die sich zwischen den Walzen 404 erstrecken, wird jedoch beim Ausführungsbeispiel der Figur 5 eine Ionisationseinrichtung 450 verwendet, die oberhalb der obersten Ebene von Walzen 404 angeordnet ist. Diese Ionisationseinrichtung 450 umfasst eine Mehrzahl von parallel in einer horizontalen Ebene verlaufenden Rohren 440, die in regelmäßigen axialen Abständen mit nach unten zeigenden Auslassstutzen 441 versehen sind. Den Innenräumen der Rohre 440 ist über eine Leitung 442 mittels eines Gebläses 443 Luft zuführbar. Bei dieser kann es sich um Kabinenluft oder auch um konditionierte, insbesondere angefeuchtete Luft handeln.

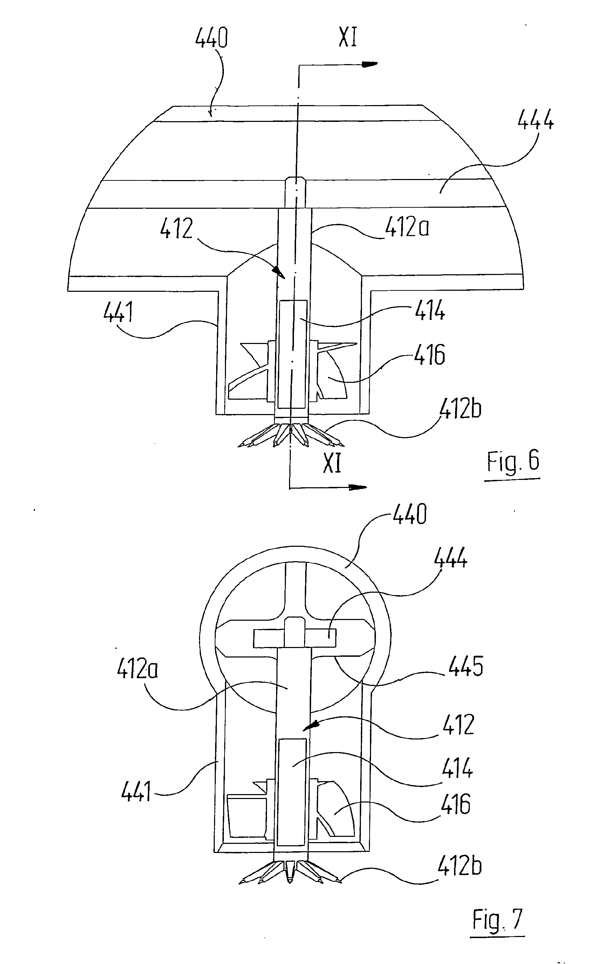

Innerhalb der Rohre 440, im mittleren Bereich und parallel zu deren Achsen, verläuft jeweils eine Tragstrebe 444, an der eine Vielzahl von Elektrodeneinrichtungen 412 befestigt ist. Die Tragstreben 444 sind durch Isolatoren 445 an den Rohren 440 gehalten (vgl. Figur 7). Jede Elektrodeneinrichtung 412 umfasst ein vertikal verlaufendes Tragrohr 412a, welches an seinem oberen Bereich mit der Tragstrebe 444 verbunden ist, beispielsweise durch eine Gewindeverbindung.

Im Inneren von jedem Tragrohr 412a ist eine Hochspannungsquelle 414 untergebracht, die in den Figuren 6 und 7 schematisch als Rechteck dargestellt ist. Allen Hochspannungsquellen 414 wird über nicht dargestellte Leitungen, welche durch die verschiedenen Tragstreben 444 und Tragrohre 412a verlaufen, eine verhältnismäßig niedrig Spannung zugeführt. Die Hochspannungsquellen 414 erzeugen aus diesen Speisespannungen eine Hochspannung. Der Ausgang der Hochspannungsquellen 414 ist mit sternförmig angeordneten, nach unten divergierenden Elektrodenspitzen 412b verbunden, die am unteren Ende des Tragrohres 412a angebracht sind.

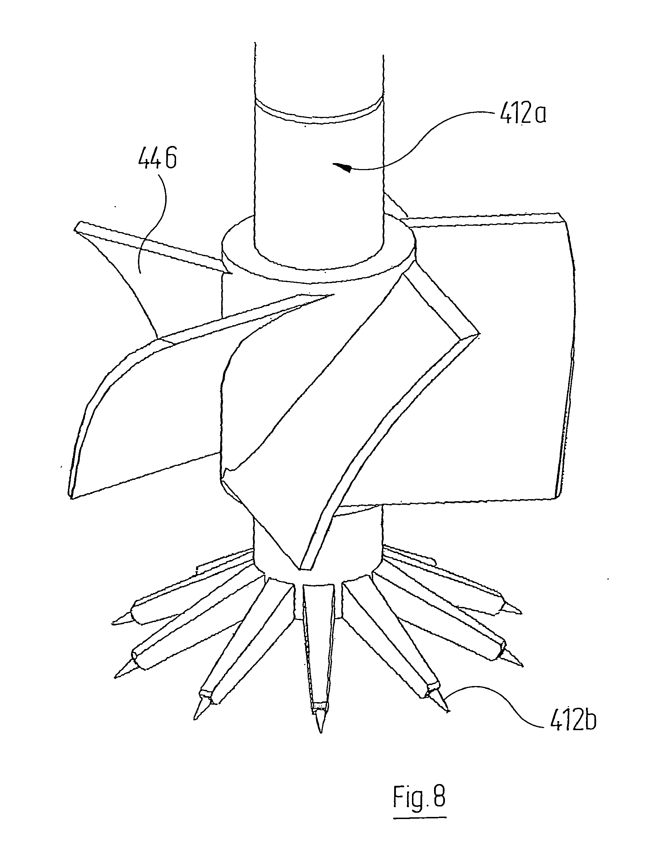

Der untere Bereich der Mantelfläche der Tragrohre 412a trägt jeweils eine Mehrzahl von Luftleitschaufeln 446, wie sie insbesondere in Figur 8 zu erkennen sind.

Zur Erläuterung der Funktionsweise des in den Figuren 5 bis 8 dargestellten Ausführungsbeispiels einer Overspray-Abscheidevorrichtung 401 genügt es, auf die unterschiedliche Art der Ionisierung der durchgeleiteten Luft und der Overspray-Partikel einzugehen. Diese geschieht wie folgt:

Die durch die Gitterroste 419 ins Innere des Gehäuse 402 gelangende, mit Overspray-Partikeln beladene Luft gelangt zwischen den Rohren 440 der Ionisierungseinrichtung 412 hindurch und vermischt sich sodann mit der gegebenenfalls konditionierten Luft, welche aus den Auslassstutzen 441 der Rohre 440 austritt. Insbesondere diese konditionierte Luft wird an den Elektrodenspitzen 412b ionisiert, eine Ionisation die sich dann bei Vermischung der aus den Auslassstutzen 441 ausströmenden Luft mit der zwischen den Rohren 440 durchströmenden Luft auf letztere überträgt. Bei der Passage der darunterliegenden Walzen 404 findet dann eine Abscheidung der geladenen Overspray-Partikeln in derselben Weise wie beim Ausführungsbeispiel der Figuren 1 und 2 statt.

Vorteil der Ionisationseinrichtung 450 des zuletzt beschriebenen Ausführungsbeispieles 404 gegenüber den Elektrodeneinrichtungen 112; 212 der anderen Ausführungsbeispiele ist die bessere Möglichkeit der Reinigung.

Bei allen Ausführungsbeispielen können die Art des Fördersystems, der Luftführung und der Elektrodeneinrichtung beliebig geändert werden, sofern nur die erwünschte Funktion erzielt wird. Statt eines nach unten geöffneten Gehäusetrichters, unter dem ein Fördersystem angordnet ist, kann auch eine geschlossene Wanne vorgesehen sein, in der eine Schabereinrichtung den gesammelten Overspray abtransportiert.

An die Elektrodeneinrichtungen kann statt eines konstanten Gleichstromes auch ein gepulster Gleichstrom angelegt werden.

Bei allen oben beschriebenen Ausführungsbeispielen strömt die Luft vertikal von oben nach unten. Es sind jedoch auch Abscheidevorrichtungen denkbar, bei denen die Luftströmungsrichtung horizontal ist. In diesem Falle können die beschriebenen Abscheidevorrichtungen um 90° verdreht eingesetzt werden, derart dass aus der Richtungsangabe "vertikal" "horizontal" und aus der Richtungsangabe "horizontal" "vertikal" wird. Auch Verdrehungen um andere Winkel als 90° sind denkbar.

## Patentansprüche

1. Vorrichtung zum Abscheiden von Lack-Overspray aus der mit Overspray beladenen Kabinenluft von Lackierkabinen mit
a) einem Gehäuse (102; 202; 402);
b) mindestens einem in dem Gehäuse (102; 202; 402) angeordneten Abscheideelement (104; 204; 404), an dessen Oberfläche die Kabinenluft entlang führbar ist, wodurch Overspray-Partikel auf der Oberfläche zurückbleiben, während ganz oder teilweise gereinigte Luft weiterströmt;
c) einer Einrichtung, mit welcher der abgeschiedene Overspray von der Oberfläche des Abscheideelements (104; 204; 404) abtransportiert wird;
wobei
d) die Oberfläche des Abscheideelements (104; 204; 404) elektrisch leitend und mit einem Pol einer Hochspannungsquelle (114; 214; 414) verbunden ist;
e) dem Abscheideelement (104; 204; 404) eine im Luftstrom angeordnete Elektrodeneinrichtnung (112; 212; 412) zugeordnet ist, die mit dem anderen Pol der Hochspannungsquelle (114; 214; 414) verbunden ist;
f) eine Einrichtung (107; 207; 407) vorgesehen ist, mit welcher das Abscheideelement (104; 204; 404;) kontinuierlich oder intermittierend in Bewegung gesetzt werden kann;
g) dem Abscheideelement (104; 204; 404) eine Abstreifeinrichtung (110; 210; 410) zugeordnet ist, welche unter Ausnutzung einer Relativbewegung zwischen Abscheideelement (104; 204; 404) und Abstreifeinrichtung (110; 210; 410) den an der Oberfläche des Abscheideelements (104; 204; 404) befindlichen Overspray abstreift,
**dadurch gekennzeichnet, dass**
h) mindestens ein Abscheideelement eine drehbare Walze (104; 204; 404) ist.

2. Vorrichtung nach Anspruch 1, **dadurch gekennzeichnet,**
**dass** mehrere Walzen (104; 204; 404) mit parallelen Achsen nebeneinander und/oder übereinander angeordnet sind.

3. Vorrichtung nach Anspruch 1 oder 2, **dadurch gekennzeichnet, dass** die Achse jeder Walze (104; 404) etwa horizontal verläuft.

4. Vorrichtung nach Anspruch 1 oder 2, **dadurch gekennzeichnet, dass** die Achse jeder Walze (204) etwa vertikal verläuft.

5. Vorrichtung nach Anspruch 1 oder 2, **dadurch gekennzeichnet, dass** die Achse jeder Walze unter einem schrägen Winkel, der weder 0° noch 90° ist, zur Horizontalen verläuft.

6. Vorrichtung nach einem der vorhergehenden Ansprüche,
**dadurch gekennzeichnet, dass** mehrere elektrisch parallel geschaltete Elektrodeneinrichtungen (112; 212) vorgesehen sind, die in die Zwischenräume zwischen den Abscheideelementen (104; 204) und/oder die Zwischenräume zwischen den Abscheideelementen (104; 204) und den Wänden des Gehäuses (102; 202) eingreifen.

7. Vorrichtung nach einem der vorhergehenden Ansprüche,
**dadurch gekennzeichnet, dass** mindestens eine Elektrodeneinrichtung (112; 212) die Form eines geradlinigen Drahtes oder Stabes aufweist.

8. Vorrichtung nach einem der vorhergehenden Ansprüche,
**dadurch gekennzeichnet, dass** mindestens eine Elektrodeneinrichtung die Form eines in einer Ebene gegebenenfalls mehrfach hin- und hergebogenen Drahtes oder Stabes besitzt.

9. Vorrichtung nach einem der vorhergehenden Ansprüche,
**dadurch gekennzeichnet, dass** mindestens eine Elektrodeneinrichtung (412) eine Mehrzahl von auseinanderweisenden Elektrodenspitzen (412b) umfasst.

10. Vorrichtung nach Anspruch 9, **dadurch gekennzeichnet,**
**dass** die Elektrodeneinrichtung (412) stromauf von dem Abscheideelement (404) im Kabinenluftstrom angeordnet ist.

11. Vorrichtung nach einem der vorhergehenden Ansprüche,
**dadurch gekennzeichnet, dass** eine Luftzuführeinrichtung (440, 441, 442, 443) vorgesehen ist, mit welcher mindestens einer Elektrodeneinrichtung (412) unabhängig von der Kabinenluft ein gesonderter Luftstrom zur Ionisation zuführbar ist.

12. Vorrichtung nach Anspruch 11, **dadurch gekennzeichnet, dass** der gesonderte Luftstrom angefeuchtet ist.

13. Vorrichtung nach einem der vorhergehenden Ansprüche,
**dadurch gekennzeichnet, dass** mindestens eine Abstreifeinrichtung ein Rakel (110; 210; 410) ist, welches den Overspray von der Oberfläche mindestens eines Abscheideelements (104; 204; 404) abstreift.

14. Vorrichtung nach einem der vorhergehenden Ansprüche,
**dadurch gekennzeichnet, dass** mindestens eine Einrichtung vorgesehen ist, mit welcher der Oberfläche eines Abscheideelements eine Benetzungsflüssigkeit zuführbar ist.

15. Vorrichtung nach einem der vorhergehenden Ansprüche,
**dadurch gekennzeichnet, dass** die Hochspannungsquelle (114; 214; 414) in der Lage ist, eine gepulste Hochspannung zu erzeugen.
